# EUROPEAN PATENT APPLICATION

(11) **EP 4 545 403 A1**
(43) Date of publication of application: **30.04.2025**
(21) Application number: 23206057.4
(22) Date of filing: 26.10.2023
(51) Int. Cl.: B64C 1/14, E05B 15/00, E05C 9/08, E05C 9/18

(54) **HATCH LOCKING DEVICE, AIRCRAFT OR SPACECRAFT HATCH AND AIRCRAFT OR SPACECRAFT**

(71) Applicant: Airbus Operations GmbH, 21129 Hamburg (DE)
(72) Inventor: Martin, Alexander, 21129 Hamburg (DE)
(74) Representative: Isarpatent

(57) **Abstract**

The present invention provides a hatch locking device (100) for an aircraft or spacecraft hatch (10), in particular for a cargo door, comprising: an actuation lever (101) for actuating the hatch locking device (100), wherein the actuation lever (101) is rotatable about a pivot axis (A101) and comprises a protruding section (102); a latch element (103), which is hinged rotatable about a hinge axis (A103) at a hatch frame (11) of the aircraft or spacecraft hatch (10) and configured to be engageable with a corresponding latch counter part (3) of a fuselage frame (2) [such that the hatch locking device 100 is positively locked]; and a connection element (104), which mechanically connects the protruding section (102) and the latch element (103) such that a rotation of the actuation lever (101) causes a rotation of the latch element (103). Further the present invention provides an aircraft or spacecraft hatch (10) comprising such hatch locking device (100) as well as an aircraft (1) comprising such an aircraft or spacecraft hatch (10).

## Description

The invention relates to a hatch locking device for an aircraft or spacecraft hatch as well as to an aircraft or spacecraft hatch containing such a hatch locking device. The invention is furthermore concerned with an aircraft or spacecraft containing such an aircraft or spacecraft hatch.

Aircraft doors in a fuselage cell of an aircraft must transfer considerable peripheral loads. The greater the diameter of a fuselage cell the higher are the peripheral loads which arise in the fuselage cell structure. The load transfer between the aircraft door and the fuselage cell structure is commonly provided through a multiple of hooks swivel mounted on a shaft which engage round substantially horizontally fixed shaft sections in the area of the fuselage cell.

High tensile forces act during the flight, in particular, in the case of relatively large aircraft doors or hatches, such as cargo hold hatches, for example. In addition, high load differences, for example in comparison between an unloaded and loaded cargo hold, can occur in the region of the hatch gaps. Therefore, the latch devices are normally designed to withstand high loads resulting in a relative high weight for such latch devices.

According to the invention, this problem is solved in each case by the subject matters of the independent claims.

According to a first aspect of the invention, a hatch locking device for an aircraft or spacecraft hatch is provided. The hatch locking device comprises an actuation lever for actuating the hatch locking device, wherein the actuation lever is rotatable about a pivot axis and comprises a protruding section. Moreover, the hatch locking device comprises a latch element, which is hinged rotatable about a hinge axis at a hatch frame of the aircraft or spacecraft hatch and configured to be engageable with a corresponding latch counter part of a fuselage frame. Further, the hatch locking device comprises a connection element, which mechanically connects the protruding section and the latch element such that a rotation of the actuation lever causes a rotation of the latch element. In particular, the hatch locking device can be provided for a cargo door.

According to a second aspect of the invention, an aircraft hatch or an spacecraft hatch comprising a hatch frame and a hatch locking device according to the first aspect of the invention is provided. The hatch locking device is mounted to the hatch frame, wherein the latch element is hinged rotatable at the hatch frame.

According to a third aspect of the invention, an aircraft or spacecraft comprising an aircraft hatch or an spacecraft hatch according to the second aspect of the invention is provided.

A fundamental concept of the invention is to provide a latch mechanism for an aircraft hatch having a reduced weight, reduced costs and reduced complexity. The latch element can be engaged with the corresponding latch counter part such that the hatch locking device is positively locked.

A particular advantage in the solution according to an aspect of the invention is that weight, costs and complexity can be reduced. Furthermore, a reliability of locking an aircraft or spacecraft hatch can be increased. A maintenance of the hatch locking device and sequencing of manufacturing processes can be optimized. In addition, one particular advantage is that the present invention can be applied to an aircraft or spacecraft without the need of changing any configuration of the fuselage of the aircraft or spacecraft. Per hatch locking device one bell crank, one solid connection rod and three bolts and corresponding nuts can be omitted when applying the present invention. Hence, a weight of the aircraft can be reduced by about 5.4 kg or more depending on the number of hatch locking devices provided in the aircraft or spacecraft hatch, for example.

Advantageous embodiments and further developments emerge from the description with reference to the figures.

According to some embodiments of the invention, the connection element comprises an adjustable length for adjusting a distance between the latch element and the protruding section of the actuation lever or latching lever, respectively. For example, the distance can be adjusted to compensate tolerances and/or to readjust the hatch locking device during life cycle. In particular, the connection element is configured as a connection rod. Furthermore, the hinge axis and the pivot axis can be fixed in relation to each other.

According to some further embodiments of the invention, one end of the connection element and the latch element form a first contact point, wherein another end of the connection element and the protruding section form a second contact point, and wherein a center of the second contact point is arranged on an opposite side of an imaginary connection line between the pivot axis and a center of the first contact point in a locked position in relation to the second contact point in an unlocked position. Thus, a torque applying on the latch element in the locked position cannot open the hatch locking device since the torque causes a rotation of the actuation lever against an unlocking direction. In other words, the connection element and the actuation lever provide an overcentered condition when the second contact point is in the above described arrangement in the locked position.

Furthermore, the actuation lever can be blocked by a mechanical stop in the locked position to avoid a rotation of the actuation lever, for example. The mechanical stop can be fixed to the hatch frame. In particular, the mechanical stop can be positioned and configured to come into contact with the protruding section in the locked position. For example, the pivot axis of the actuation lever is substantially parallel to the hinge axis of the latch element.

According to some further embodiments of the invention, the hatch locking device further comprises a locking member or locking cam, respectively, for securing the latch element in a locked position, wherein the locking member is rotatable about a locking shaft axis, which is substantially parallel to the hinge axis. Hence, the latch element is secured by the locking member in the locked position independently of the actuation lever. That means, when the locking member secures the latch element, the latch element cannot be opened by the actuation lever. For example, the locking member is configured as an eccentric body or locking cam, respectively, which is rotatable about the locking shaft axis such that the eccentric body blocks a correspondingly shaped hump of the latch element. Furthermore, the locking shaft axis can be fixed in relation to the hinge axis and the pivot axis.

According to some further embodiments of the invention, the protruding section and the locking member each comprise a protrusion, which are arranged and configured to face each other when the latch element is secured by the locking member, wherein a distance between the facing protrusions is shorter than a perpendicular distance between the center of the second contact point and the imaginary connection line in the locked position. Thus, a rotation of the actuation lever towards the unlocked position is blocked by the protrusions, when the locking member secures the latch element. When the locking member does not secure the latch element, the protrusions do not face each other since the locking member is rotated about the locking shaft axis compared to the secured condition. The protrusions could also be described as additional locking cams.

According to some further embodiments of the invention, the distance between the facing protrusions is in the range of about 0.5 mm to 2.0 mm, in particular the distance between the facing protrusions is about 1 mm. A value of an overcentering of the connection element and of the actuation lever is larger than the distance between the facing protrusions.

According to some further embodiments of the invention, the perpendicular distance between the center of the second contact point and the imaginary connection line in the locked position is in the range of about 1.5 mm to 4.0 mm. In particular, the perpendicular distance between the center of the second contact point and the imaginary connection line in the locked position is about 2.5 mm. Thereby, the perpendicular distance between the center of the second contact point and the imaginary connection line is always larger than the distance between the facing protrusions in the locked position.

According to some further embodiments of the invention, the latch element is configured as a latching hook.

According to some further embodiments of the invention, the at least one hatch locking device comprises four to twelve hatch locking devices. For example, the at least one hatch locking device comprises six, eight or ten hatch locking devices. The four to twelve hatch locking devices can be arranged at a horizontal side of the aircraft or spacecraft hatch, wherein the horizontal side extends perpendicular to the orientation of the fuselage frame, meaning parallel to a longitudinal axis of the fuselage. In an aircraft hatch with six hatch locking devices, for example, a weight of the aircraft hatch can be reduced by about 2.7 kg.

According to some further embodiments of the invention, the aircraft or spacecraft hatch further comprises a rotatable locking shaft, which is mechanically coupled to the locking member and extends along the locking shaft axis. The locking shaft is configured to rotate the locking member. For example, the locking member is torsionally rigidly coupled to the locking shaft. Moreover, the locking shaft can be operated manually or by a drive unit.

According to some further embodiments of the invention, the aircraft or spacecraft hatch further comprises an actuation shaft or latching shaft, respectively, which is mechanically coupled to the actuation lever and extends along the pivot axis. The actuation shaft is configured to rotate the actuation lever. For example, the actuation lever is torsionally rigidly coupled to the actuation shaft. Moreover, the actuation shaft can be actuated manually or by a drive unit.

For example, the actuation shaft can be coupled mechanically to a drive system, which comprises at least one of the following: a drive shaft, a drive belt or a worm drive. The drive system can be configured to drive/operate the actuation shaft such that the actuation lever can be rotated. Thus, the drive unit does not need to be arranged next to the hatch locking device. In particular, when the aircraft hatch comprises more than one hatch locking device the drive system can couple each hatch locking device to the drive unit. Therefore, each hatch locking device of the aircraft or spacecraft hatch can be operated at the same time.

According to some further embodiments of the invention, the aircraft or spacecraft hatch is configured as a cargo door.

According to some further embodiments of the invention, the aircraft or spacecraft further comprises a fuselage frame with a latch counter part, which is configured to receive the latch element. In other words, the latch counter part is configured to engage with the latch element in the locked position. For example, the latch counter part can comprise or be configured as an adjustable spool for compensating manufacturing and/or installation tolerances.

The present invention is explained more specifically below on the basis of the exemplary embodiments indicated in the schematic figures, in which:
- Fig. 1: shows a schematic illustration of an aircraft with an aircraft hatch comprising a hatch locking device according to an embodiment of the invention; and
- Fig. 2: shows a schematic illustration of a hatch locking device in a locked position according to a further embodiment of the invention.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

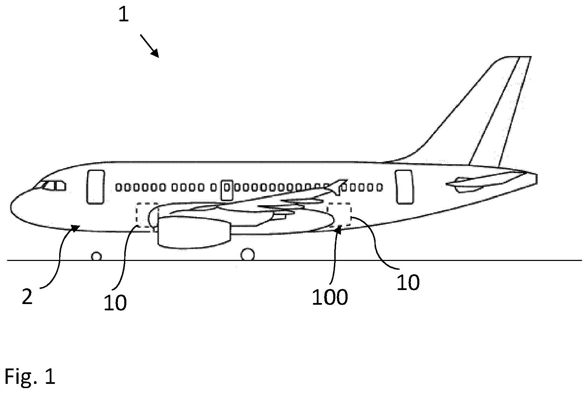

Fig. 1 shows a schematic illustration of an aircraft 1 with an aircraft hatch 10 comprising a hatch locking device 100.

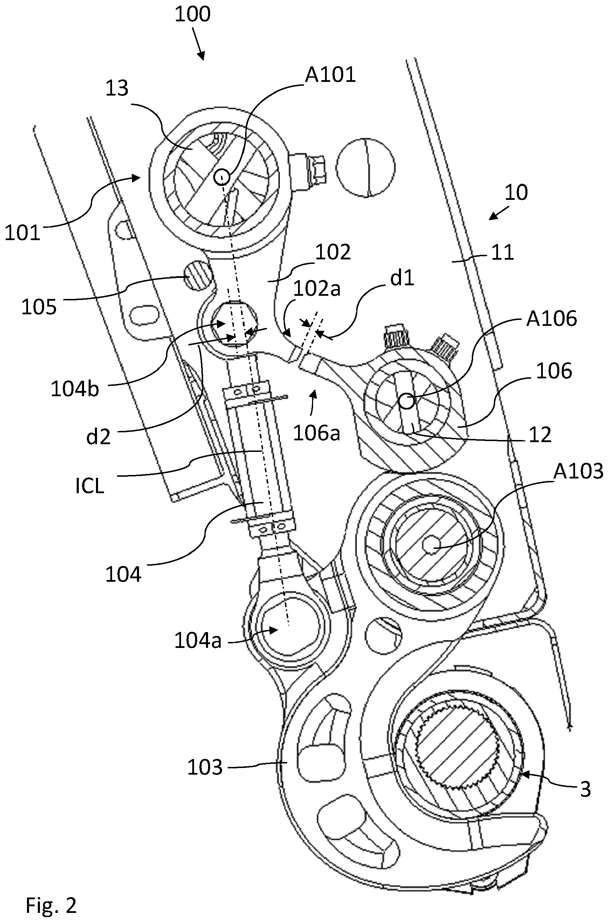

The aircraft 1 comprises a fuselage frame 2 with a latch counter part 3, which is configured to receive a latch element of the hatch locking device 100, as it is illustrated in Fig. 2. For example, the latch counter part can comprise or be configured as an adjustable spool for compensating manufacturing and/or installation tolerances.

The aircraft hatch 10 comprises a hatch frame 11 and at least one hatch locking device 100. The at least one hatch locking device 100 can comprise four to twelve hatch locking devices 100. For example, the at least one hatch locking device 100 comprises six, eight or ten hatch locking devices. Optionally, the aircraft hatch 10 is configured as a cargo door.

The at least one hatch locking device 100 is mounted to the hatch frame 11, wherein the latch element 103 is hinged rotatable at the hatch frame 11.

The four to twelve hatch locking devices 100 can be arranged at a horizontal side of the aircraft hatch 10, wherein the horizontal side extends perpendicular to the orientation of the fuselage frame 2.

The aircraft hatch 10 is attached by a hinge to the fuselage frame 2. Preferably, the aircraft hatch 10 is attached on an upper side of the aircraft hatch 10 to the fuselage frame 2. More particularly, the aircraft hatch 10 is attached by a multi-part hinge, and swivels outwards during the opening movement.

Fig. 2 shows a schematic illustration of a hatch locking device 100 in a locked position. In the illustrated locked position, the hatch locking device 100 is integrated in an aircraft hatch 10 and locked to a fuselage frame. The hatch locking device 100 is configured for a cargo door.

The hatch locking device 100 comprises an actuation lever or latching lever 101, respectively, for actuating the hatch locking device 100, wherein the actuation lever 101 is rotatable about a pivot axis A101 and comprises a protruding section 102.

Further, the hatch locking device 100 comprises a latch element 103, which is hinged rotatable about a hinge axis A103 at a hatch frame 11 of the aircraft or spacecraft hatch 10 and configured to be engageable with a corresponding latch counter part 3 of a fuselage frame such that the hatch locking device 100 is positively locked. Exemplarily, the latch element 103 is configured as a latching hook.

Additionally, the hatch locking device 100 comprises a connection element 104. As illustrated in Fig. 2, the connection element 104 is configured as a connection rod.

The connection rod 104 mechanically connects the protruding section 102 and the latching hook 103 such that a rotation of the actuation lever 101 causes a rotation of the latching hook 103. The connection rod 104 comprises an adjustable length for adjusting a distance between the latching hook 103 and the protruding section 102 of the actuation lever 101. For example, the distance can be adjusted to compensate tolerances and/or to readjust the hatch locking device 100 during life cycle. Furthermore, the hinge axis A103 and the pivot axis A101 are fixed in relation to each other.

One end of the connection rod 104 and the latching hook 103 form a first contact point 104a, wherein another end of the connection rod 104 and the protruding section 102 form a second contact point 104b, and wherein a center of the second contact point 104b is arranged on an opposite side of an imaginary connection line ICL between the pivot axis A101 and a center of the first contact point 104a in a locked position in relation to the second contact point 104b in an unlocked position. Thus, the connection rod 103 and the actuation lever 101 provide an overcentered condition when the second contact point 104b is in the above described arrangement in the locked position.

Furthermore, the actuation lever 101 can be blocked by a mechanical stop 105 in the locked position to avoid a rotation of the actuation lever 101, for example. The mechanical stop 105 is fixed to the hatch frame 11. In particular, the mechanical stop 105 is positioned and configured to come into contact with the protruding section 102 in the locked position. For example, the pivot axis A101 of the actuation lever 101 is parallel to the hinge axis A103 of the latching hook 103. In case of a rotation against the unlocking direction a force is transmitted into the hatch frame instead of the mechanism of the hatch locking device. In case of a rotation against the unlocking direction a force is transmitted into the hatch frame 11 instead of the mechanism of the hatch locking device 100.

In Fig. 2, the hatch locking device 100 further comprises a locking member/locking cam 106 for securing the latching hook 103 in a locked position, wherein the locking member 106 is rotatable about a locking shaft axis A106, which is substantially parallel to the hinge axis A103. Hence, the latching hook 103 is secured by the locking member 106 in the locked position independently of the actuation lever 101. That means, when the locking member 106 secures the latching hook 103, the latching hook 103 cannot be opened by the actuation lever 101. For example, the locking member 106 is configured as an eccentric body, which is rotatable about the locking shaft axis A106 such that the eccentric body blocks a correspondingly shaped hump of the latching hook 103. Furthermore, the locking shaft axis A106 can be fixed in relation to the hinge axis A103 and the pivot axis A101.

The protruding section 102 and the locking member 106 each comprise a protrusion 102a, 106a, which are arranged and configured to face each other when the latching hook 103 is secured by the locking member 106, wherein a distance d1 between the facing protrusions 102a, 106a is shorter than a perpendicular distance d2 between the center of the second contact point 104b and the imaginary connection line ICL in the locked position. Thus, a rotation of the actuation lever 101 towards the unlocked position is blocked by the protrusions 102a, 106a, when the locking member 106 secures the latching hook 103. When the locking member 106 does not secure the latching hook 103, the protrusions 102a, 106a do not face each other since the locking member 106 is rotated about the locking shaft axis A106 compared to the secured condition.

The distance d1 between the facing protrusions 102a, 106a is about 1 mm. The perpendicular distance d2 between the center of the second contact point and the imaginary connection line in the locked position is about 2.5 mm.

The aircraft hatch 10 exemplarily comprises a hatch frame 11, a rotatable locking shaft 12, an actuation shaft/latching shaft 13 and a hatch locking device 100. Optionally, the aircraft hatch 10 may comprise a drive system (not shown). The drive system could be mounted to the hatch frame 11 and drive the actuation lever 101. The drive system could mechanically couple or comprise the actuation shaft 13. The hatch locking device 100 is mounted to the hatch frame 11. For example, the hatch locking device 100 is arranged between two adjacent hatch frames 11.

The locking shaft 12 is mechanically coupled to the locking member 106 and extends along the locking shaft axis A106. The locking shaft 12 is configured to rotate the locking member 106. For example, the locking member 106 is torsionally rigidly coupled to the locking shaft 12. Moreover, the locking shaft 12 can be operated manually or by a drive unit.

The actuation shaft 13 is mechanically coupled to the actuation lever 101 and extends along the pivot axis A101. The actuation shaft 13 is configured to rotate the actuation lever 101. For example, the actuation lever 101 is torsionally rigidly coupled to the actuation shaft 13. Moreover, the actuation shaft 13 can be actuated manually or by a drive unit.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### Reference list

- 1: aircraft or spacecraft
- 2: fuselage frame
- 3: latch counter part
- 10: aircraft or spacecraft hatch
- 11: hatch frame
- 12: locking shaft
- 13: actuation shaft
- 100: hatch locking device
- 101: actuation lever
- 102: protruding section
- 102a: protrusion of the protruding section
- 103: latch element
- 104: connection element
- 104a: first contact point
- 104b: second contact point
- 105: mechanical stop
- 106: locking member
- 106a: protrusion of the locking member

- A101: pivot axis
- A103: hinge axis
- A106: locking shaft axis
- ICL: imaginary connection line
- d1: distance between the facing protrusions
- d2: perpendicular distance between the center of the second contact point and the imaginary connection line

## Claims

1. Hatch locking device (100) for an aircraft or spacecraft hatch (10), in particular for a cargo door, comprising:
an actuation lever (101) for actuating the hatch locking device (100),
wherein the actuation lever (101) is rotatable about a pivot axis (A101) and comprises a protruding section (102);
a latch element (103), which is hinged rotatable about a hinge axis (A103) at a hatch frame (11) of the aircraft or spacecraft hatch (10) and configured to be engageable with a corresponding latch counter part (3) of a fuselage frame (2); and
a connection element (104), which mechanically connects the protruding section (102) and the latch element (103) such that a rotation of the actuation lever (101) causes a rotation of the latch element (103).

2. Hatch locking device (100) according to claim 1, wherein the connection element (104) comprises an adjustable length for adjusting a distance between the latch element (103) and the protruding section (102) of the actuation lever (101).

3. Hatch locking device (100) according to claim 1 or 2, wherein one end of the connection element (104) and the latch element (103) form a first contact point (104a), wherein another end of the connection element (104) and the protruding section (102) form a second contact point (104b), and wherein a center of the second contact point (104b) is arranged on an opposite side of an imaginary connection line (ICL) between the pivot axis (A101) and a center of the first contact point (104a) in a locked position in relation to the second contact point (104b) in an unlocked position.

4. Hatch locking device (100) according to one of the preceding claims, further comprising a locking member (106) for securing the latch element (103) in a locked position, wherein the locking member (106) is rotatable about a locking shaft axis (A106), which is substantially parallel to the hinge axis (A103).

5. Hatch locking device (100) according to claim 4, wherein the protruding section (102) and the locking member (106) each comprise a protrusion (102a, 106a), which are arranged and configured to face each other when the latch element (103) is secured by the locking member (106), wherein a distance (d1) between the facing protrusions (102a, 106a) is shorter than a perpendicular distance (d2) between the center of the second contact point (104b) and the imaginary connection line (ICL) in the locked position.

6. Hatch locking device (100) according to claim 5, wherein the distance (d1) between the facing protrusions (102a, 106a) is in the range of about 0.5 mm to 2.0 mm, in particular the distance (d1) between the facing protrusions is about 1 mm.

7. Hatch locking device (100) according to claim 5 or 6, wherein the perpendicular distance (d2) between the center of the second contact point (104b) and the imaginary connection line (ICL) in the locked position is in the range of about 1.5 mm to 4.0 mm, in particular the perpendicular distance (d2) between the center of the second contact point and the imaginary connection line in the locked position is about 2.5 mm.

8. Hatch locking device (100) according to one of the preceding claims,
wherein the latch element (103) is configured as a latching hook.

9. Aircraft or spacecraft hatch (10), comprising:
a hatch frame (11); and
at least one hatch locking device (100) according to one of the preceding claims, which is mounted to the hatch frame (11), wherein the latch element (103) is hinged rotatable at the hatch frame (11).

10. Aircraft or spacecraft hatch (10) according to claim 9, wherein the at least one hatch locking device (100) comprises four to twelve hatch locking devices (100).

11. Aircraft or spacecraft hatch (10) according to claim 9 or 10, further comprising a rotatable locking shaft (12), which is mechanically coupled to the locking member (106) and extends along the locking shaft axis (A106).

12. Aircraft or spacecraft hatch (10) according to one of claims 9 to 11, further comprising an actuation shaft (13), which is mechanically coupled to the actuation lever (101) and extends along the pivot axis (A101).

13. Aircraft or spacecraft (1) with an aircraft or spacecraft hatch (10) according to one of claims 9 to 12.

14. Aircraft or spacecraft (1) according to claim 13, wherein the aircraft or spacecraft hatch (10) is configured as a cargo door.

15. Aircraft or spacecraft (1) according to claim 14, further comprising a fuselage frame (2) with a latch counter part (3), which is configured to receive the latch element (103).
